# EUROPEAN PATENT SPECIFICATION

(11) **EP 2 161 910 B1**
(45) Date of publication and mention of the grant of the patent: **29.03.2017**
(21) Application number: 07845992.2
(22) Date of filing: 19.12.2007
(51) Int. Cl.: H04M 3/56, H04L 29/06, H04M 1/56, H04M 1/57, H04M 3/42

(54) **A METHOD FOR CONTROLLING USER NUMBER DISPLAYED IN THE CONFERENCE SERVICE NOTICING INFORMATION**
VERFAHREN ZUR STEUERUNG DER IN DEN KONFERENZDIENSTBENACHRICHTIGUNGSINFORMATIONEN ANGEZEIGTEN BENUTZERNUMMER
PROCÉDÉ SERVANT À COMMANDER UN NOMBRE D'UTILISATEURS AFFICHÉ DANS LES INFORMATIONS DE NOTIFICATION D'UN SERVICE DE CONFÉRENCE

(30) Priority: 15.06.2007 CN 200710112761
(43) Date of publication of application: 10.03.2010
(73) Proprietor: ZTE Corporation, Shenzhen, Guangdong 518057 (CN)
(72) Inventor: SHEN, Min, Shenzhen, Guangdong 518057 (CN)
(74) Representative: Pistolesi, Roberto
(86) International application number: PCT/CN2007/003697
(87) International publication number: WO 2008/151490

(56) References cited:
- WO-A1-2005/122470
- WO-A2-98/26564
- WO-A2-03/098849
- CN-A- 1 792 083
- CN-A- 1 848 881
- CN-A- 1 874 546
- CN-A- 1 882 110
- US-A1- 2004 225 679
- US-A1- 2005 047 561
- US-A1- 2007 047 714

## Description

### Technical Field

The present invention relates to the communication field, and more specifically, to a method for controlling user number display in the conference service notification message in the next generation network (NGN).

### Background of the Related Art

In the next generation network (NGN) in which the IP multimedia sub-system (IMS) works as the core, the Session Initiation Protocol (SIP) serves as the service control protocol, and every communication service may be performed through the cooperation between the users' intelligent terminals and the application servers (ASs) in the network deployed by the operators.

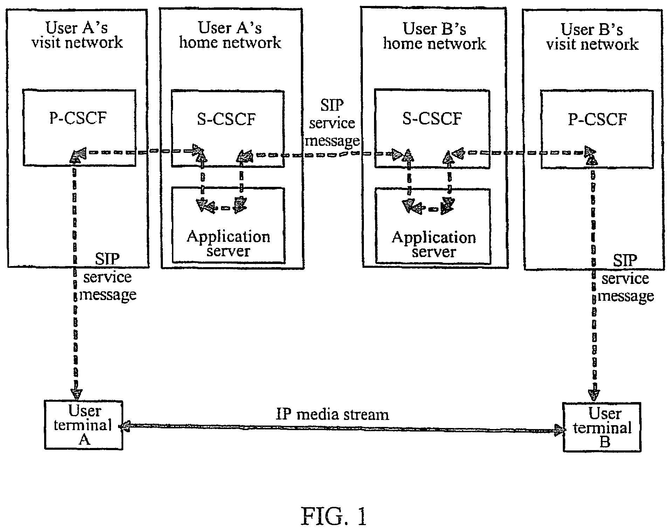

FIG.1 illustrates a typical service implementation framework in the NGN, wherein, the AS (might be multiple for different services) connects with the service-call session control function (S-CSCF) in the user's home network through an interface, and the SIP service control message (indicated by the dashed line) between user terminals A and B will through their respective proxy-call session control function (P-CSCF) in the visit network and service-call session control function (S-CSCF) and ASs (might be different ASs according to the types of user services) in the home network, and the ASs can provide a plenty of services by processing the SIP service control message in different ways. User terminals A and B exchange and negotiate the media parameters supported by both of them by using the SIP service control message, thus establish IP media stream connection between them (indicated by solid line), and the IP media stream is used to transfer data such as voice packet. If the AS has the capability of processing the media, media stream connection can be established between the user terminal and the AS to achieve man-machine conversation service, such as the automatic voice service offered by the banks.

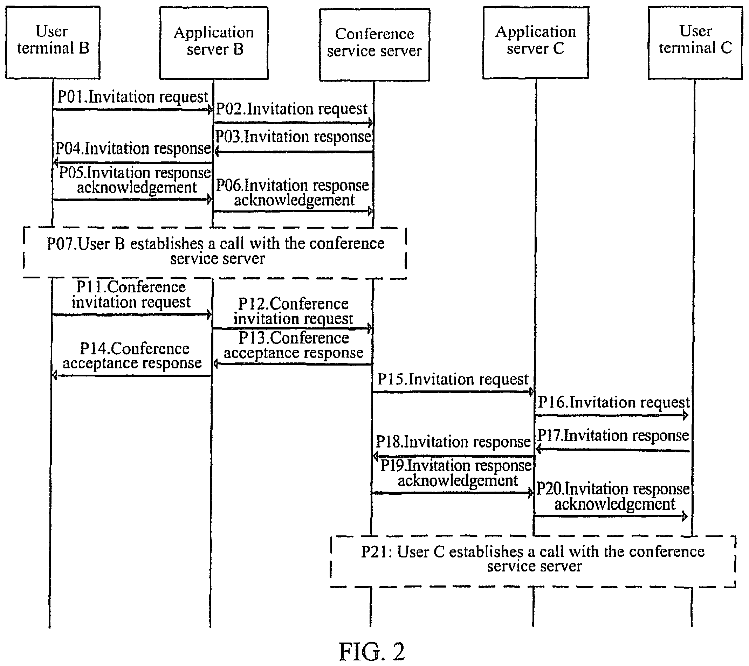

FIG.2 is a typical flow of conference service in the prior art. For simplification, the P-CSCF, S-CSCF and other network equipments have been omitted. In FIG.2, the conference service server is used to provide all users with the conference service function, is able to establish simultaneously speech paths with many users, and send the audio media after mixed to each of them.
P01~P06: User B first sends the session invitation request to the conference service server, receives the session invitation response sent back by the conference service server, and sends the session invitation response acknowledgement to the conference service server, thus a session resource is established;
P07: A call is established between user B and the conference service server;
P11~P12: User B sends the conference invitation request to the conference service server to request the conference service server invite user C to participate in the conference;
P13~P14: The conference service server sends the conference reception response to user B;
P15~P21: The conference service server sends the session invitation request to user C according to user B's request, and establishes a call with user C to make user C participate in the conference (it is called as the passive way of participating in the conference in the following); user B might continue to send the conference invitation request to the conference service server to request the conference service server invite other users to participate in the conference. Other users might actively sends the session invitation request to the conference service server to establish a call with the conference service server (similar to P01~P06), thus participate in the conference (it is called as the active way of participating in the conference in the following).

After a user participates in the conference, he can withdraw from the conference by releasing his call with the conference service server.

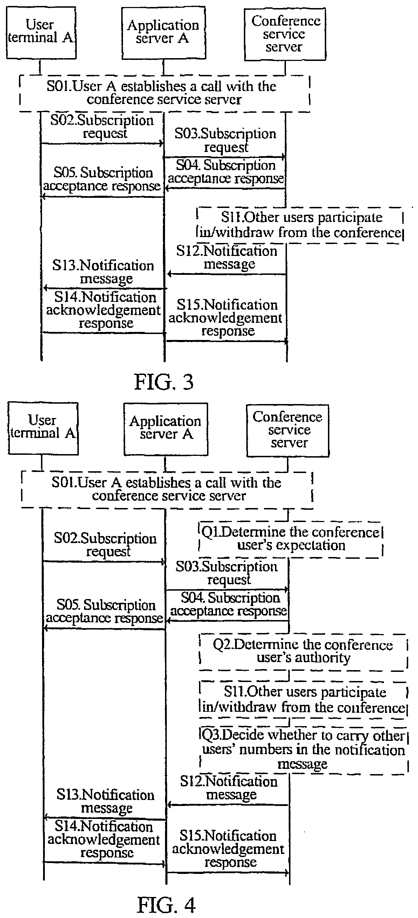

A conference might have a lot of users participating in, and after a user participates in a conference, he might care who participates in or withdraws from the conference afterwards. In the prior art, the NGN users can acquire this information by subscribing the conference events. As shown in FIG.3, after user A successfully participates into the conference (S01), he can send the subscription request to the conference service server (S02~S03), and the conference service server returns the subscription acceptance response to him (S04~S05), and when there is some other user participating in or withdrawing from the conference (S11), the conference service server sends a notification message to user A (S12~S13), and the notification message has the user number, activity (participating in or withdrawing from the conference), and so on; user A returns the notification message acknowledgement response (S14~S15) to acknowledge that he has received the notification message.

However, in practical applications, some users participating in the conference are willing to keep their numbers private, that is, they require that the conference notification message sent to other users by the conference service server (as S12 in FIG.3) does not carry their own numbers.

In the current networks, several services related to the user's number have been offered for two-party call, including Originating Identification Presentation (OIP), Terminating Identification Presentation (TIP), Originating Identification Restriction (OIR) and Terminating Identification Restriction (TIR), and these services can be activated or deactivated according to the user configurations and the users can configure their own services to implement their individualized demand.

For a two-party call, suppose UE_A is the calling party, and UE_B is the called party. If UE_B activates the OIP service, the network carries the UE_A's number in the call request message sent to UE_B who may acquire the information of UE_A's number at the same time of terminal ringing. If UE_A is unwilling to let UE_B know his number, he can activate the OIR service so that the call request message sent by the network to UE_B does not carry the UE_A's number.

Similarly, if UE_A activates the TIP service, the network carries the real called party's number of this call in the call response message sent to UE_A, and one example of this demand is call forward, for example, the call from UE_A to UE_B is forwarded to UE_C, and the real called party's number in this case is UE_C's number, and UE_A can acquire the really called party's number of this call. If the user of UE_B, that is, the user who configures the call forward, is unwilling to let UE_A acquire the real called party's number, that is, the UE_C's number, UE_B might activate the TIR service, thus the call response message sent by the network to UE_A does not carry the information of the real called party's number.

Generally, one user activating the OIR service can make the OIP service at the other party disabled, so as the TIR service.

However, the available specifications do not offer a method for controlling the user's number display in the conference notification message in the condition of conference service (that is, multi-party call).

Reference is also made to document WO2005/122470, that discloses some features of independent claim 1.

### Summary of the Invention

The object of the present invention is to provide a method for controlling display of the user number in the conference service notification message to determine whether to carry the user's number in the conference service notification message, as defined by the features of the independent claim 1.

In order to solve the above technical problem, the present invention provides a method for controlling display of the user number in the conference service notification message, and the method is applied in the IP multimedia sub-system and comprises the following steps of:
before the conference service server sends the conference service notification message to UE_A which subscribing the conference events in the conference, determining by the conference service server whether to display the number information of the UEs participating in or withdrawing from the conference to said UE_A in said conference service notification message according to an authority value of UE_A and user expectation values of other UEs participating in or withdrawing from the conference, and said user expectation values indicating whether the users are willing to display number information thereof to other conference users in the conference, and said authority value indicating whether the user is authorized to receive numbers of other users.

Furthermore, said method further comprises the following steps of:
(1) determining by said conference service server the user expectation values of the UEs participating in or withdrawing from the conference and the authority values of all conference users subscribing the conference events;
(2) when said conference service server sends the conference notification message to the conference users subscribing the conference events, displaying or hiding by said conference service the number information of the UEs participating in or withdrawing from the conference according to the authority values of the conference users subscribing the conference events as well as the user expectation values of the UEs participating in or withdrawing from the conference.

Furthermore, only when the authority values of the conference users subscribing the conference events indicate that the conference users are authorized to receive number information of other users and the user expectation values of the UEs participating in or withdrawing from the conference indicate that the UEs are willing to display numbers thereof to other conference users, displaying by said conference service server the number information of the UEs participating in or withdrawing from the conference in said conference service notification message.

Furthermore, when the authority values of the users subscribing the conference events are not consistent with the user's expectation values of the UEs participating in or withdrawing from the conference, if levels of the authority values are determined to meet one of the following conditions, said conference service server still displays the number information of the UE participating in or withdrawing from the conference: the authority values of the conference users subscribing the conference events are in high level; said conference user who subscribing the conference events have the override authority.

Furthermore, said the authority values of the conference users subscribing the conference events are in high level means that the users are users creating the conference or users specified by the operator, conference service provider or the conference organizer.

Furthermore, the setting of the user expectation value and authority value by said conference service server comprises the following steps or any one of them: setting for all conference users the same expectation value or some of them with difference expectations; setting for all conference users the same authority value or some of them with different authority value.

Furthermore, said conference service server provides a visiting interface for the conference users, operators, conference service provider or the conference organizers to set the authority and/or expectation value for said conference users.

Furthermore, said conference users set their own authority values in one of the following ways:
Said conference users use the visiting interface offered by said conference service server to set their own authority value; or use the default authority value set by said conference service server;
Said conference users set their own authority values based on whether the OIP or TIP is activated.

Furthermore, when said conference users set their own authority values based on whether the OIP or the TIP service is activated, they determine the kinds of the services of the users according to the way in which the users participating in the conference, and if said conference users participate in the conference in the active way, their authority values are determined according to whether they activate said TIP; if said conference users participate in the conference in the passive way, their authority values are determined according to whether they activate the OIP or not.

Furthermore, said conference users set their expectation values through one of the following methods:
Said conference users use the visiting interface offered by said conference service server to set their own user expectation values; or use default one set by said conference service server;
Said conference users express their expectation based on whether the OIR or TIR is activated.

In the procedure that said conference users establish a call with said conference service server, they use the privacy headers to express their expectation.

Furthermore, when said conference users express their expectation based on whether the OIR or TIR service is activated, they further determine the kinds of services of the users according to the way in which the users participating in the conference, and if said conference users participate in the conference in the active way, their expectation values are determined according to whether they activate the OIR; if said conference users participate in the conference in the passive way, their expectation values are determined according to whether they activates the TIR or not.

With the present invention, the limitation for the user's number displayed in the conference service notification message can be implemented flexibly, which meets the demands by the operators, the conference service providers, the conference organizers and the conference users.

### Brief Description of Drawings

FIG. 1 is a diagram of the typical service implementation framework in the NGN in the prior art;
FIG. 2 is a flow chart of the conference service in the prior art;
FIG. 3 is a flow chart of the user acquiring other users' information through subscribing the conference events;
FIG. 4 is an example of specific implementation flow in an embodiment of the present invention.

### Preferred Embodiments of the Present Invention

In a two-party call, in order to meet some special needs, the network operators can offer some special users (such as the police office, the emergency center, and so on) a special kind of authority--override authority. The users who have the override authority can disable the OIR or TIR service activated by the opposite party, thus acquire the opposite party's number information through the OIP or TIP service.

Generally, the conference service server should have the override authority, thus it can obtain all conference users' number information, no matter whether the conference users activate the OIR or TIR service or not. Alternatively, if the conference service server does not have the override authority, one necessary precondition for the conference notification message sent by the conference service serve to conference user B carrying the conference user A's number information is that the conference service server has the conference user A's number information. Thus the premise of the present invention is that the conference service server has user A's number information.

The present invention will be described in further detail with combination of the accompanying figures and the embodiments.

The method of this embodiment can achieve a restriction on the conference user's number display in the conference notification message sent to the conference users according to the user configuration in the OIP, OIR, TIP and TIR services etc., and no other configurations directed to conference services need to be done by the conference user.

The conference service server can determine whether it carries the conference user A's number information in the conference notification message sent to conference user B or not according to the following two conditions:
Condition one: the expectation of user A, that is, whether user A is willing to display his number information to other conference users or not;
Condition two: the user B's authority, that is, whether user B has the authority to receive other users' number information or not.

Table 1 shows an example of the conference service server making a decision (whether the conference notification message sent to conference user B carries the conference user A's number information or not) according to the two conditions. From Table 1, it can be seen that only when conference user A is willing to display his number to other conference users and conference user B has the authority to receive other conference users' number information does the conference service server carry the conference user A's number information in the conference notification message sent to conference user B.

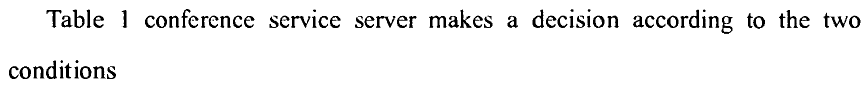

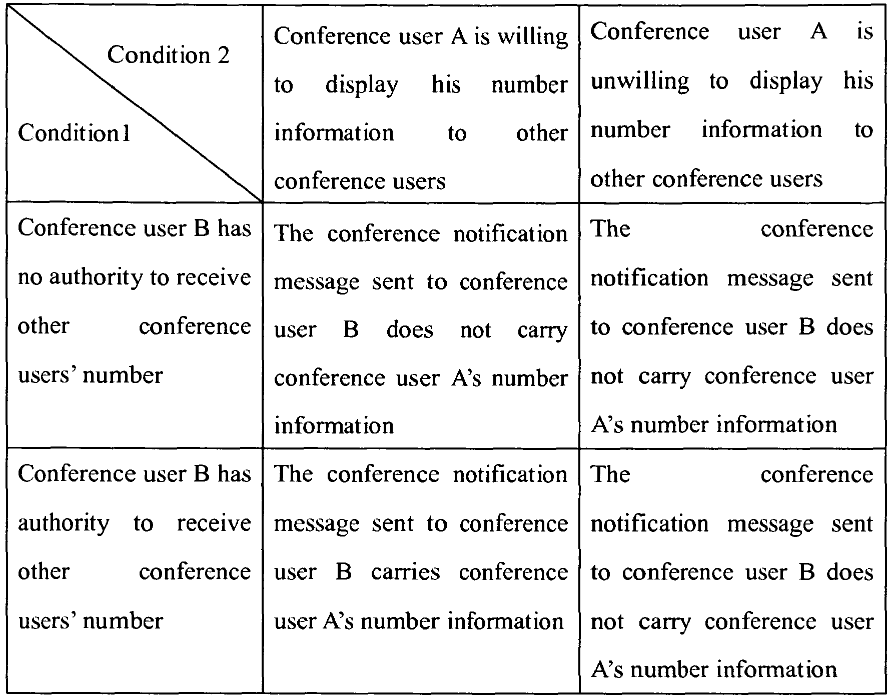

For the condition that user A is unwilling to display his number information to other users while user B has the authority to receive other users' number information, one of the following two steps can be chosen according to the practical conditions:
(1) The conference service server does not carry user A's number information in the conference notification message sent to user B, that is, only when both condition one and condition two are met does the conference notification message sent to user B carry user A's number information, and this case is similar to the previous example;
(2) The conference service server applies different decisions according to user B's authority level and this case is another example:

In the following one or more cases, the conference service server may suppose user B has rather high authority level, and carry the user A's number information in the conference notification message sent to user B in the condition that user A is unwilling to display his number information to other users:

### 1) User B has a high authority level;

This high authority may be offered by the conference service server, for example, user B is a user who founds the conference. The user who founds the conference should participate in the conference for the whole course and control the conference, and also has the responsibility to guarantee the legality of all conference attendees, therefore, needs to know every attendee's user number to make sure the conference can go on smoothly;

Alternatively, this high authority might be offered by the operators, conference service providers or the conference organizers who set for one user they trust (such as user B) a high authority for a certain purpose (such as management needs).

### 2) User B has the override authority

This is a special authority offered by the network operators for some special users (such as the police office, emergency center, and so on).

The above operators are the NGN network providers, and since the conference call is performed in the NGN, the operators should manage all services in the network; the above conference service providers are the providers of the conference service server, they might be the operators, or certain value-added service providers, and they manage the services provided by themselves; the above conference organizers are personnel who organize the conference, they might need to pay for the service server, but might not to participate in the conference by themselves.

That is to say, each conference user has his authority (that is, the value of authority), including "numbers can be seen" and "numbers cannot be seen", and when the user's authority conflicts with the other users' expectation, for example, when user A's expectation is not to show his number to other users, while user B's authority indicates that he has the authority to receive other users' number information, including user A, it can further judge according to user B's authority, and if user B has higher authority level or has the right to override his authority, he can receives user A's number, otherwise, he cannot.

The conference service server can provide a certain visiting interface for the operators, conference service providers, conference organizers or the conference users configure the associated content, and the interface can be based on the WEB mode or other available technologies.

For condition one, that is, the conference users' expectation, the conference service server can set a same expectation value, i.e. default expectation value, for all conference users according to the pre-configuration by the operators, considering that all users are willing or unwilling to have their own numbers displayed to other users.

Furthermore, the operators, conference service providers or conference organizers can preset an expectation value that different from the default one for some one or more special users (such as the conference organizers, those who have the override authority). For example, the conference organizers are willing to have their numbers displayed to other conference users, while all other users are unwilling to let their numbers displayed to other conference users except of themselves.

The operators, conference service providers or the conference organizers can set the users' default expectation value for all conferences or a certain one through the visiting interface offered by the conference service server, and they also apply a list of users whose expectation values are different from their default ones.

All these could be correspondingly set according to the practical needs.

For condition one, that is, the conference users' expectation, the conference service server might also allow the conference users determine their expectation freely according to one of the following methods:
Method 1 (M1): The conference service server offers a visiting interface to the conference users for the users to pre-set their expectation; if a user does not set his expectation, the conference service server considers that the user applies the default one;
Method 2 (M2): Refer the configuration of the conference users in the OIR or TIR service, that is, if a user activates the OIR or TIR service, the user is considered to be unwilling to let his number displayed to other users;
   For M2, it may further to determine whether to refer the configuration in the OIR service or the configuration in the TIR service according to the method for the user participating in the conference. If the conference user participates in the conference in the active way, his expectation is determined according to his configuration in the OIR service; if the conference user participates in the conference in the passive way, his expectation is determined according to his configuration in the TIR service.
Method 3 (M3): During the process that the conference user establishes a call with the conference service server, he might carry a Privacy header in the session invitation request or the invitation response acknowledgement sent to the conference service server to indicate whether the conference user's number is hidden during the call establishment or not. This privacy header indicates that the user is willing to temporarily activate the OIR or TIR service in the two-party call, and it is referred now to indicate the user's expectation.

The advantage of applying the method 2 or method 3 is to not only allow the conference users flexibly determine their expectation, but also do not need to specifically configure the conference services. Referring the OIR, TIR service configuration or the privacy header is reasonable in some degree, since they indicate whether the conference users are willing to disclose their own numbers to the conference service server or not, and if no, he might be unwilling to let his number displayed to other conference users, and vice versa.

If the user configures the OIR or TIR service, and carries the privacy header in the message as well, but the service intention conflicts with the privacy header intention, it will prefer to apply that indicated by the privacy header.

For condition two (user's authority), there is similar process, which is specified as follows:

The conference service server might set for all conference users a same authority value (i.e. the default one) according to the pre-configuration by the operators, considering that all users have or have no authority to receive other users' numbers.

Furthermore, the operators, conference service providers or the conference organizers might pre-set some one or more special users (such as the conference organizer, the uses has the override authority) with an authority different from the default one. For example, the conference organizers have the authority to receive other conference users' numbers, while all other users have no authority to receive other conference users' numbers except of themselves.

The operators, conference service providers or the conference organizers can set the user's default authority for all conferences or a certain one via the visiting interface offered by the conference service server, and it has a list of users whose authority values are different from the default ones.

For condition two (the user's authority), the conference service server might allow the users determine their authority freely through the following method:
Method 1 (N1): The conference service server offers a visiting interface for the conference users to pre-set their authorities; if a user does not set his authority, the conference service server considers that the user applies the default one;
Method 2 (N2): Refer the configuration of the conference users in the OIR or TIR service, that is, if a user activates the OIR or TIR service, it considers that the user has the authority to receive other users' numbers;
   For N2, it may further to determine whether to refer the configuration in the OIR service or the configuration in the TIR service according to the method for the user participating in the conference. If the conference user participates in the conference in the active way, his authority is determined according to the user's configuration in the TIP service; if the conference user participates in the conference in the passive way, the user's authority is determined according to the user's configuration in the OIP service.

The advantage of applying N2 is to not only allow the conference users flexibly set their authorities, but also do not need to specifically set the conference services. Referring the OIR and TIR service configurations is reasonable in some degree, since they indicate whether the conference users have the authority to receive the number information of the conference service server or not, and if yes, he should also have the authority to receive other users' number; and vice versa.

In the prior art, the OIP, TIP, OIR and TIR service configuration information are stored in the user's home subscriber server (HSS) or the application server (AS) offering the OIP, TIP, OIR and TIR services. If it is the former, the conference service server can use its interface with the HSS to obtain the OIP, TIP, OIR and TIR service configuration information; if it is latter, an interface is established between the conference service server and the AS offering the OIP, TIP, OIR and TIR services to obtain the OIP, TIP, OIR and TIR service configuration information.

FIG.4 is an embodiment in the conference service process of the present invention. On the basis of FIG.3, FIG.4 adds the following three steps:
Step Q1: Determine the conference user A's expectation value, including "numbers willing to be displayed" and "numbers unwilling to be displayed". After user A participates in the conference, the conference service server determines the user's expectation according to the method of the present invention;
Step Q2: Determine conference user B's authority value, including "numbers can be seen" and "numbers cannot be seen". After the request for the user subscribing the conference events has been accepted, the conference service server can determine the user's authority according to the method of the present invention;
Step Q3: After the event that it needs to send the conference notification message to user B happens, the service server correspondingly carries or does not carry conference user A's number in the notification message according to conference user A's expectation value and conference user B's authority value in the present invention, that is, correspondingly display or hide the number information.

Wherein, the above three steps' order is only an example, and their order can be flexibly determined during the implementation, as long as it meets the following conditions:
1) Q3 should be implemented before S12;
2) Q1 and Q2 should be implemented before Q3.

Undoubtedly, the present invention may have several other embodiments, and without departing from the essence of the present invention, those skilled in the field can make all kinds of modification or variations which should belong to the scope of the claims of the present invention.

### Industrial Applicability

With the method of the present invention, the control for the user's number information display in the conference notification message sent to the conference user can be flexibly implemented according to the user's configuration in the OIP, OIR, TIP and TIR services, and there is no need for the conference users to do other configurations, which met the demands of the operators, the conference service providers, conference organizers and the conference users.

## Claims

1. A method for controlling display of a user number in a conference service notification message, applied in the Internet Protocol multimedia sub-system, comprising:
before a conference service server sends a conference service notification message to a user subscribing to conference events in a conference, determining, by said conference service server, whether to provide in said conference service notification message number information of other user equipments participating in or withdrawing from the conference so as to display to said user, according to an authority value of said user and user expectation values of said other user equipments participating in or withdrawing from the conference,
wherein, said user expectation values indicate whether users are willing to display their numbers thereof to other users in the conference, and said authority value indicates whether the user has an authority to receive the number information of other users.

2. A method of claim 1, further comprising steps of:
1) determining by said conference service server the user expectation values of user equipments participating in or withdrawing from the conference and authority values of all conference users subscribing to the conference events;
2) when said conference service server sends the conference notification message to the conference users subscribing to the conference events, displaying or hiding by said conference service server number information of the user equipments participating in or withdrawing from the conference according to the authority values of the conference users subscribing to the conference events as well as the user expectation values of the user equipments participating in or withdrawing from the conference.

3. A method of claim 1 or 2, wherein,
only when the authority values of the conference user subscribing to the conference events indicate that the conference users are authorized to receive the number information of other users and the user expectation values of the user equipments participating in or withdrawing from the conference indicate that the user equipments are willing to display the number information thereof to other conference users, said conference service server displays in said conference service notification message the number information of the user equipments participating in or withdrawing from the conference.

4. A method of claim 1. 2 or 3, wherein,
when the user expectation values of the user equipments participating in or withdrawing from the conference indicate that the user equipments are not willing to display their number information thereof to other conference users, said conference service server still provides in said conference service notification message the number information of the user equipments participating in or withdrawing from the conference if levels of the authority values of the conference users are determined to meet at least one of the following conditions:
the authority values of the conference users subscribing to the conference events are in high level; and
the conference users subscribing to the conference events have an override authority.

5. A method of claim 4, wherein,
said authority values of the conference users subscribing to the conference events are in high level means that the users are users creating the conference or users specified by an operator, a conference service provider or a conference organizer.

6. A method of claim 1 or 2, further comprising:
setting the user expectation values and authority values by said conference service server, which comprises the following steps or any one thereof:
setting all conference users with a same expectation value or a portion of said all conference users with difference expectation values;
setting all conference users with a same authority value or a portion of said all conference users with different authority values.

7. A method of claim 6, wherein said conference service server provides a visiting interface for the conference users, operators, a conference service provider or conference organizers to set the authority values and/or expectation values for said conference users.

8. A method of claim 1, 2 or 6, wherein said conference users set their own authority values in one of the following ways:
said conference users use the visiting interface offered by said conference service server to set the authority values thereof; or use default authority values set by said conference service server;
said conference users set the authority values thereof based on whether the Originating Identity Presentation or Terminating Identity Presentation is activated.

9. A method of claim 8, further comprising:
when said conference users set the authority values thereof based on whether the Originating Identity Presentation or the Terminating Identity Presentation service is activated, determining by said conference users kinds of services of the users according to ways in which the users participate in the conference, and if said conference users participate in the conference in an active way, determining the authority values of said conference users based on whether said conference users activate said Terminating Identity Restriction; if said conference users participate in the conference in a passive way, determining the authority values of said conference users based on whether said conference users activate the Originating Identity Presentation.

10. A method of claim 1 or 2 or 6, wherein said conference users set the user expectation values thereof in one of the following ways:
said conference users use the visiting interface offered by said conference service server to set the user expectation values thereof; or use default user expectation values configured by said conference service server;
said conference users express expectation thereof based on whether the Originating Identity Restriction or Terminating Identity Restriction is activated;
in the process of establishing a call with said conference service server, said conference users use privacy headers to express the expectation thereof.

11. A method of claim 10, further comprising:
when said conference users express the expectation thereof based on whether the Originating Identity Restriction or Terminating Identity Restriction service is activated, determining by said conference users kinds of services of the users according to ways in which the users participate in the conference, and if said conference users participate in the conference in an active way, determining the expectation values of said conference users based on whether said users activate the Originating Identity Restriction; if said conference users participate in the conference in a passive way, determining the expectation values of the users based on whether said users activate the Terminating Identity Restriction.

## Patentansprüche

1. Verfahren zur Steuerung der Anzeige einer Nutzernummer in einer Konferenzdienst-Benachrichtigungsmeldung, die in dem Internet-Protokoll Multimedia Sub-System eingesetzt wird, welches umfasst:
bevor ein Konferenz-Dienstserver eine Konferenzdienst-Benachrichtigungsmeldung an einen Nutzer, der sich an Konferenz-Events in einer Konferenz anmeldet, übermittelt, Bestimmen durch den Konferenz-Dienstserver, ob in der Konferenzdienst-Benachrichtigungsmeldung Nummer-Information anderer Nutzer-Geräte, die an der Konferenz teilnehmen oder sich davon abmelden, geliefert werden, um diese dem Nutzer gemäß einem Berechtigungswert des Nutzers und gemäß Nutzer-Erwartungswerten der anderen Nutzer-Geräte, die an der Konferenz teilnehmen oder sich davon abmelden, anzuzeigen,
wobei die Nutzer-Erwartungswerte angeben, ob die Nutzer ihre Nummern an andere Nutzer in der Konferenz anzeigen wollen, und wobei der Berechtigungswert angibt, ob der Nutzer eine Berechtigung besitzt, die Nummer-Information anderer Nutzer zu empfangen.

2. Verfahren nach Anspruch 1, welches die Schritte umfasst:
1) Bestimmen der Nutzer-Erwartungswerte der Nutzer-Geräte die an der Konferenz teilnehmen oder sich davon abmelden, und der Berechtigungswerte aller Konferenz-Nutzer, die sich an Konferenz-Events anmelden, durch den Konferenz-Dienstserver;
2) wenn der Konferenz-Dienstserver die Konferenz-Benachrichtigungsmeldung zu den Konferenz-Nutzern, die sich an den Konferenz-Events angemeldet haben, übermittelt, Anzeigen oder Verstecken der Nummer-Information der Nutzer-Geräte, die an der Konferenz teilnehmen oder sich davon abmelden, durch den Konferenz-Dienstserver gemäß den Berechtigungswerten der Konferenz-Nutzer, die sich an den Konferenz-Events anmelden, sowie der Nutzer-Erwartungswerte der Nutzer-Geräte, die an der Konferenz teilnehmen oder sich davon abmelden.

3. Verfahren nach Anspruch 1 oder 2, wobei,
nur wenn die Berechtigungswerte der Konferenz-Nutzer, die an den Konferenz-Events angemeldet sind, anzeigen, dass die Konferenz-Nutzer berechtigt sind, die Nummer-Information anderer Nutzer und die Nutzer-Erwartungswerte der Nutzer-Geräte, die an der Konferenz teilnehmen oder sich davon abmelden, zu empfangen, Anzeigen, dass die Nutzer-Geräte bereit sind, die Nummer-Information davon anderen Konferenz-Nutzer anzuzeigen, wobei der Konferenz-Dienstserver in der Konferenzdienst-Benachrichtigungsmeldung die Nummer-Information der Nutzer-Geräte, die an der Konferenz teilnehmen oder sich davon abmelden, anzeigt.

4. Verfahren nach Anspruch 1, 2 oder 3, wobei,
wenn die Nutzer-Erwartungswerte der Nutzer-Geräte, die an der Konferenz teilnehmen oder sich davon abmelden anzeigen, dass die Nutzer-Geräte nicht bereit sind, die Nummer-Information davon anderen Konferenz-Nutzern anzuzeigen, liefert der Konferenz-Dienstserver in der Konferenzdienst-Benachrichtigungsmeldung noch die Nummer-Information der Nutzer-Geräte, die an der Konferenz teilnehmen oder sich davon abmelden, wenn das Niveau der Berechtigungswerte der Konferenz-Nutzer bestimmt wird, dass dieses mindestens einem der folgenden Bedingungen genügt:
die Berechtigungswerte der Konferenz-Nutzer, die an Konferenz-Events angemeldet sind, sind in hohen Niveaus; und
die Konferenz-Nutzer, die an Konferenz-Events angemeldet sind, besitzen eine Übersteuerungs-Berechtigung.

5. Verfahren nach Anspruch 4, wobei
dass die Berechtigungswerte der Konferenz-Nutzer, die an Konferenz-Events angemeldet sind, in einem hohen Niveau sind, bedeutet, dass die Nutzer solche Nutzer sind, die die Konferenz erstellen oder Nutzer, die von einem Betreiber, einem Konferenz-Dienst-Provider oder einem Konferenz-Organisator, spezifiziert sind

6. Verfahren nach Anspruch 1 oder 2, welches weiter umfasst:
Festlegen der Nutzer-Erwartungswerte und -Berechtigungswerte durch den Konferenz-Dienstserver, welches die folgenden Schritte oder jeden davon umfasst:
Festlegen aller Konferenz-Nutzer mit dem gleichen Erwartungswert oder einen Teil aller Konferenz-Nutzer mit unterschiedlichen Erwartungswerten;
Festlegen aller Konferenz-Nutzer mit dem gleichen Berechtigungswert oder einen Teil aller Konferenz-Nutzer mit unterschiedlichen Berechtigungswerten.

7. Verfahren nach Anspruch 6, wobei der Konferenz-Dienstserver eine Besucher-Schnittstelle für die Konferenz-Nutzer, den Betreiber, einen Konferenz-Dienst-Provider oder Konferenz-Organisatoren liefert, um die Berechtigungswerte und/oder Erwartungswerte für die Konferenz-Nutzer festzulegen.

8. Verfahren nach Anspruch 1, 2 oder 6, wobei die Konferenz-Nutzer ihre eigenen Berechtigungswerte in einer der folgenden Art und Weisen festlegen :
die Konferenz-Nutzer nutzen die Besucher-Schnittstelle, die von dem Konferenz-Dienstserver angeboten wird, um die Berechtigungswerte davon festzulegen; oder verwenden Standard-Berechtigungswerte, die von dem Konferenz-Dienstserver festgelegt werden;
die Konferenz-Nutzer legen die Berechtigungswerte davon fest, basierend darauf, ob die Ursprungs-Identitätsdarstellung oder die Beendigungs-Identitätsdarstellung aktiviert ist.

9. Verfahren nach Anspruch 8, welches weiter umfasst:
wenn der Konferenz-Nutzer die Berechtigungswerte davon basierend darauf festlegt, ob der Ursprungs-Identitätsdarstellungs- oder der Beendigungs-Identitätsdarstellung-Dienst aktiviert ist, Bestimmen durch den Konferenz-Nutzer der Art von Diensten der Nutzer gemäß Wegen, in denen die Nutzer an der Konferenz teilnehmen, und wenn die Konferenz-Nutzer an der Konferenz in einer aktiven Art und Weise teilnehmen, Bestimmen der Berechtigungswerte der Konferenz-Nutzer basierend darauf, ob die Konferenz-Nutzer die Beendigungs-Identitätsbeschränkung aktivieren; wenn die Konferenz-Nutzer an der Konferenz in einer passiven Art und Weise teilnehmen, Bestimmen der Berechtigungswerte der Konferenz-Nutzer basierend darauf, ob die Konferenz-Nutzer die Ursprungs-Identitätsdarstellung aktivieren.

10. Verfahren nach Anspruch 1 oder 2 oder 6, wobei die Konferenz-Nutzer die Nutzer-Erwartungswerte davon in einer der folgenden Art und Weisen festlegen:
die Konferenz-Nutzer verwenden die Besucher-Schnittstelle, die von dem Konferenz-Dienstserver geliefert wird, um die Nutzer-Erwartungswerte davon festzulegen; oder verwenden Standard-Nutzer-Erwartungswerte, die von dem Konferenz-Dienstserver konfiguriert werden;
die Konferenz-Nutzer drücken die Erwartung basierend darauf aus, ob die Ursprungs-Identitätsbeschränkung oder die Beendigungs-Identitätsbeschränkung aktiviert ist;
die Konferenz-Nutzer verwenden in dem Verfahren einen Anruf mit dem Konferenz-Dienstserver aufzubauen, Datenschutz-Kopfzeilen, um die Erwartung davon auszudrücken.

11. Verfahren nach Anspruch 10, welches weiter umfasst:
wenn der Konferenz-Nutzer die Erwartung davon ausdrückt, basierend darauf, ob der Ursprungs-Identitätsbeschränkungs- oder der Beendigungs-Identitätsbeschränkungs-Dienst aktiviert ist, Bestimmen durch den Konferenz-Nutzer der Arten von Diensten der Nutzer gemäß den Wegen, auf denen die Nutzer an der Konferenz teilnehmen, und wenn die Konferenz-Nutzer an der Konferenz in einer aktiven Art und Weise teilnehmen, Bestimmen der Erwartungswerte der Konferenz-Nutzer basierend darauf, ob die Nutzer die Ursprungs-Identitätsbeschränkung aktivieren; wenn die Konferenz-Nutzer an der Konferenz in einer passiven Art und Weise teilnehmen, Bestimmen der Erwartungswerte der Nutzer basierend darauf, ob die Nutzer die Beendigungs-Identitätsbeschränkung aktivieren.

## Revendications

1. Procédé de contrôle de l'affichage d'un nombre d'utilisateurs dans un message de notification de service de conférence, appliqué dans le sous-système multimédia Internet Protocol, comprenant :
avant qu'un serveur de service de conférence envoie un message de notification de service de conférence à un utilisateur s'abonnant à des événements de conférence dans une conférence, détermination, par ledit serveur de service de conférence, s'il faut fournir, dans ledit service de conférence, des informations de nombre de messages de notification d'autres équipements utilisateurs participant ou se retirant de la conférence de façon à afficher à l'attention dudit utilisateur, selon une valeur d'autorité dudit utilisateur et des valeurs d'attente de l'utilisateur desdits autres équipements utilisateurs participant ou se retirant de la conférence,
dans lequel lesdites valeurs d'attente d'utilisateur indiquent si les utilisateurs veulent afficher leurs nombres de ceux-ci à l'attention d'autres utilisateurs dans la conférence et ladite valeur d'autorité indique si l'utilisateur a une autorité pour recevoir les informations de nombres d'autres utilisateurs.

2. Procédé selon la revendication 1, comprenant en outre les étapes suivantes :
1) détermination par ledit serveur de service de conférence des valeurs d'attente d'utilisateur d'équipements utilisateurs participant ou se retirant de la conférence et des valeurs d'autorité de tous les utilisateurs de la conférence s'abonnant aux événements de la conférence ;
2) lorsque ledit serveur de service de conférence envoie le message de notification de conférence aux utilisateurs de la conférence s'abonnant aux événements de la conférence, affichage ou l'occultation, par ledit serveur de service de conférence, de l'information du nombre d'équipements utilisateurs participant ou se retirant de la conférence selon les valeurs d'autorité des utilisateurs de la conférence s'abonnant aux événements de la conférence ainsi que les valeurs d'attente d'utilisateur des équipements utilisateurs participant ou se retirant de la conférence.

3. Procédé selon la revendication 1 ou 2, dans lequel :
seulement lorsque les valeurs d'autorité de l'utilisateur de la conférence s'abonnant aux événements de la conférence indiquent que les utilisateurs de la conférence sont autorisés à recevoir l'information du nombre d'autres utilisateurs et les valeurs d'attente d'utilisateurs des équipements utilisateurs participant ou se retirant de la conférence indiquent que les équipements utilisateurs veulent afficher l'information du nombre de ceux-ci à l'attention d'autres utilisateurs de la conférence, ledit serveur de service de conférence affichant, dans ledit message de notification de service de conférence, l'information du nombre d'équipements utilisateur participant ou se retirant de la conférence.

4. Procédé selon la revendication 1, 2 ou 3, dans lequel :
lorsque les valeurs d'attente de l'utilisateur des équipements utilisateurs participant ou se retirant de la conférence indiquent que les équipements utilisateurs ne veulent pas afficher leur information de nombre de ceux-ci à l'attention d'autres utilisateur de conférence, ledit serveur de service de conférence continue de fournir, dans ledit message de notification de service de conférence, l'information du nombre d'équipements utilisateurs participant ou se retirant de la conférence si les niveaux des valeurs d'autorité des utilisateurs de la conférence sont déterminés comme remplissant au moins une des conditions suivantes :
les valeurs d'autorité des utilisateurs de la conférence s'abonnant aux événements de la conférence sont à un niveau élevé ; et
les utilisateurs de la conférence s'abonnant aux événements de la conférence ont une autorité de dérogation.

5. Procédé selon la revendication 4, dans lequel :
lesdites valeurs d'autorité des utilisateurs de la conférence s'abonnant aux événements de la conférence sont d'un niveau élevé signifie que les utilisateurs sont des utilisateurs créant la conférence ou des utilisateurs spécifiés par un opérateur, un fournisseur de service de conférence ou un organisateur de conférence.

6. Procédé selon la revendication 1 ou 2, comprenant en outre :
l'ajustement des valeurs d'attente d'utilisateurs et de valeurs d'autorité par ledit serveur de service de conférence, qui comprend les étapes suivantes ou l'une d'elles :
ajustement de tous les utilisateurs de la conférence à une même valeur d'attente ou d'une partie desdits utilisateurs de la conférence avec différentes valeurs d'attente ;
ajustement de tous les utilisateurs de la conférence à une même valeur d'autorité ou d'une partie desdits utilisateurs de la conférence avec différentes valeurs d'autorité.

7. Procédé selon la revendication 6, dans lequel ledit serveur de service de conférence fournit une interface de visite pour les utilisateurs de la conférence, les opérateurs, un fournisseur de service de conférence ou des organisateurs de conférences pour ajuster les valeurs d'autorité et/ou les valeurs d'attente pour lesdits utilisateurs de la conférence.

8. Procédé selon la revendication 1, 2, ou 6, dans lequel lesdits utilisateurs de la conférence ajustent leurs propres valeurs d'autorité d'une des manières suivantes :
lesdits utilisateurs de la conférence utilisent l'interface de visite proposée par ledit serveur de service de conférence pour ajuster les valeurs d'autorité de ceux-ci ; ou utilisent des valeurs d'autorité par défaut ajustées par ledit serveur de service de conférence ;
lesdits utilisateurs de la conférence ajustent les valeurs d'autorité de ceux-ci en fonction du fait que l'Originating Identity Presentation ou la Terminating Identity Presentation est activée ou non.

9. Procédé selon la revendication 8, comprenant en outre :
lorsque lesdits utilisateurs de la conférence ajustent les valeurs d'autorité de ceux-ci en fonction du fait que l'Originating Identity Presentation ou la Terminating Identity Presentation est activée ou non, détermination par lesdits utilisateurs de la conférence, des types de services des utilisateurs selon les façons dont les utilisateurs participent à al conférence, détermination des valeurs d'autorité desdits utilisateurs de la conférence en fonction du fait que les utilisateurs de la conférence activent ou non ladite Terminating Identity Restriction ; si lesdits utilisateurs de la conférence participent à la conférence d'une manière passive, détermination des valeurs d'autorité desdits utilisateurs de la conférence en fonction du fait que les utilisateurs de la conférence activent ou non ladite Originating Identity Presentation.

10. Procédé selon la revendication 1 ou 2 ou 6, dans lequel lesdits utilisateurs de la conférence ajustent les valeurs d'attente d'utilisateur de ceux-ci d'une des façons suivantes :
lesdits utilisateurs de la conférence utilisent l'interface de visite proposée par ledit serveur de service de conférence pour ajuster les valeurs d'attente d'utilisateurs de ceux-ci ; ou utilisent les valeurs d'attente d'utilisateurs par défaut configurées par ledit serveur de service de conférence ;
lesdits utilisateurs de la conférence expriment l'attente de ceux-ci en fonction du fait que l'Originating Identity Presentation ou la Terminating Identity Restriction est activée ou non ;
dans le processus d'établissement d'un appel avec ledit serveur de service de conférence, lesdits utilisateurs de la conférence utilisent des en-têtes de vie privée pour exprimer l'attente de ceux-ci.

11. Procédé selon la revendication 10, comprenant en outre :
lorsque lesdits utilisateurs de la conférence expriment l'attente de ceux-ci en fonction du fait que le service Originating Identity Presentation ou Terminating Identity Restriction est activé ou non, détermination, par lesdits utilisateurs de la conférence, des types de service des utilisateurs selon des façons dont les utilisateurs participent à la conférence et, si lesdits utilisateurs de la conférence participent à la conférence d'une manière active, détermination des valeurs d'attente desdites utilisateurs de la conférence en fonction du fait que lesdits utilisateurs activent l'Originating Identity Restriction ; si lesdits utilisateurs de la conférence participent à la conférence d'une manière passive, détermination des valeurs d'attente des utilisateurs en fonction du fait que lesdits utilisateurs activent ou non la Terminating Identity Restriction.
